Europäisches Patentamt

European Patent Office

Office européen des brevets

(19)

(11) Publication number: **0 443 936 A1**

# (12) EUROPEAN PATENT APPLICATION

(21) Application number: 91400435.3

(22) Date of filing: 19.02.91

(51) Int. Cl.⁵: **G01V 5/10, E21B 47/00**

(30) Priority: 20.02.90 FR 9002001

(43) Date of publication of application:
28.08.91 Bulletin 91/35

(84) Designated Contracting States:
DE GB IT NL

(71) Applicant: SCHLUMBERGER LIMITED
277 Park Avenue
New York, N.Y. 10172 (US)
GB
Applicant: SCHLUMBERGER TECHNOLOGY
B.V.
Carnegielaan 12
NL-2517 KM Den Haag (NL)
DE IT
Applicant: SCHLUMBERGER HOLDINGS
LIMITED
P.O. Box 71, Craigmuir Chambers
Road Town, Tortola (VG)
NL

(72) Inventor: Seeman, Bronislaw
98, avenue du Général Leclerc
F-75014 Paris (FR)

(74) Representative: Chareyron, Lucien et al
Service Brevets Patent Department Etudes et
Productions Schlumberger BP 202
F-92142 Clamart Cédex (FR)

(54) Method and apparatus for evaluating the cement in a well.

(57)    A method and apparatus for evaluating the cement (10) in a borehole where a determined concentration of substance such as boron or a boron compound is initially mixed with the cement. After the casing (12) has been cemented, logging measurements are performed in the borehole by means of a sonde (14) including a fast neutron source (24) and a plurality of gamma ray detectors (25a, 25d) distributed all around the sonde. The gamma ray spectrum detected by each detector is analyzed in order to obtain the number of neutron-capture gamma rays due to thermal neutron interactions with boron. The information obtained in this way is directly related to the quantity of boron present around the well, and is used for determining the thickness of cement surrounding the casing.

EP 0 443 936 A1

FIG. 2

# METHOD AND APPARATUS FOR EVALUATING THE CEMENT IN A WELL

The invention relates to evaluating the cement used for cementing the casing of a well. The invention relates more particularly to a method and apparatus for quantitative evaluation of the cement situated around the casing of a well.

When a well drilled for oil prospecting reaches a given depth, casing is generally inserted down the well to said depth and cement is injected into the annular space surrounding the casing so as to isolate the various formations through which the well passes from one another. It is important to know whether the cement is isolating the formations satisfactorily at various depths in order to avoid any fluid intercommunication. In production, it would be catastrophic if fluid were to pass from a water-bearing formation to an oil-bearing formation along the casing.

Various logging apparatuses are used for evaluating the cement in wells. Such apparatuses generally use acoustic waves to determine the quality of the bonding between the casing and the cement. One such apparatus which inspects the periphery of the casing is described, in particular, in US patent 4 685 092 (Dumont). Although these apparatuses give good results concerning the presence of communication channels through the cement, there are difficult problems in interpreting the results quantitatively.

Apparatuses have been proposed that used nuclear techniques for evaluating cement. For example, US patent 4 129 777 describes apparatus comprising a gamma ray source and three detectors that are responsive to radiation that has penetrated to three different depths in the medium surrounding the well. The thickness of the cement is determined from the measurements of the three detectors. This technique is based on the difference in density between the cement and the surrounding formations and on the lateral investigation depths obtained by the detectors at different spacings. Since these parameters are not fully under control, such a technique does not give good results, in practice. In addition, the results obtained relate only to a mean evaluation of the medium surrounding the well without any discrimination in azimuth.

Nuclear methods are also known for detecting the installation of various materials injected into a well where the material to be injected is marked by a radioactive tracer that emits gamma rays. Thereafter, those zones in the well which emit these gamma rays are detected, which zones consequently contain the injected material. The main drawback of these techniques is that they make the well radioactive for a relatively long period of time since the radioactivity must sufficiently be longlasting for it to be possible to perform adequate measurements in the well.

In US patent 2 231 577 (Hare) a nuclear logging tool is described for detecting the top of the cement in a well where a non-radioactive substance such as boron is mixed into the cement prior to its being forced around the casing. The tool comprises a source of fast neutrons and a device for detecting these neutrons after they have been scattered and slowed down around the tool. Such a tool is highly sensitive to interactions of the neutrons with the fluids inside the casing since such fluids, generally water, usually contain an important proportion of hydrogen.

Nuclear logging techniques are also known for evaluating underground formations through cemented casing. As described in US patent 4 055 763, one of these techniques consists in irradiating the formations with neutrons and in detecting the neutron-capture gamma ray spectrum due to interactions between thermal neutrons and the formations. By analyzing the gamma ray spectrum, it is possible to obtain information on the proportions of the various elements such as hydrogen, chlorine, silicon, calcium, iron, and sulfur contained in the formations. In these methods, the cement situated around the casing has little influence on the measurement and is merely a source of disturbance.

The object of the invention is to provide a nuclear method and apparatus for reliably providing quantitative detection of the cement surrounding the casing.

Another object of the invention is to provide a nuclear logging method and apparatus for evaluating the cement surrounding a casing when the cement has been mixed with a non-radioactive marker such as boron. This evaluation is preferably performed in different zones distributed around the periphery of the well.

The present invention provides a method for evaluating the cement placed around a casing in a well where a determined concentration of a substance, such as boron, having a large neutron capture cross-section and a specific gamma ray emission is mixed into the cement prior to placing the cement around the casing. The method comprises: irradiating the surrounding medium with neutrons emitted by a neutron source disposed in a logging sonde adapted to be displaced along the well; with the loging sonde, detecting neutron capture gamma rays due to interactions of the emitted neutrons with the surrounding medium to generate first signals representative of the detected gamma rays; and processing said first signals representative of the detected gamma rays to generate second signals representative of the number of gamma rays due to neutron interactions with said substance, thereby producing an indication of the quantity of cement surrounding the casing.

Preferably, the detecting step comprises detecting a spectrum of gamma rays having an energy range which is substantially wider than that corresponding to neutron capture gamma rays due to interactions of thermal neutrons with said substance. The processing step comprises: combining predetermined standard spectra corresponding to the irradiation of said substance and of elements likely to be contained in the surrounding medium to provide a combined spectrum; and comparing said combined spectrum with said detected gamma ray spectrum to generate said second signals representative of gamma rays due to thermal neutron interactions with said substance.

In another aspect, the present invention provides a logging apparatus for evaluating the cement placed around a casing in a well, comprising: a neutron source disposed in a logging sonde adapted to be displaced along the well for irradiating the surrounding medium; means disposed in the sonde for detecting neutron capture gamma rays due to interactions of the neutrons with said surrounding medium to generate first signals representative of said detected gamma rays; and means for processing said first signals representative of detected gamma rays, to generate second signals representative of the number of gamma rays due to neutron interactions with said substance, thereby producing an indication of the quantity of cement surrounding the casing.

Preferably the detecting means comprises a plurality of detectors for detecting neutron capture gamma rays coming from a plurality of different zones distributed around the well.

The source may be a californium-252 chemical source and the detecting means preferably includes at least one scintillation detector for detecting neutron capture gamma rays over a wide range of energies including the neutron capture gamma ray energies due to thermal neutron interactions with said substance. The processing means may comprises pulse height analyzers and computation means for generating signals representative of the spectrum of the detected gamma rays. A standard spectrum combination technique is used to determine the number of counts due to the substance and output signals can be computed that are representative of the thickness of the cement.

The characteristics and advantages of the invention appear more clearly from the following description of a non-limiting example given with reference to the accompanying drawings, in which:

Figure 1 shows a gamma ray spectrum due to thermal neutron capture as may be obtained by irradiating a formation in the ground with neutrons;

Figure 2 is a diagram of logging apparatus of the invention for detecting the cement surrounding a casing;

Figure 3 is a block diagram of the electronic circuits of the apparatus of Figure 2;

Figure 4 is a cross-section through the downhole sonde of Figure 2; and

Figure 5 is a cross-section through a variant of the downhole sonde.

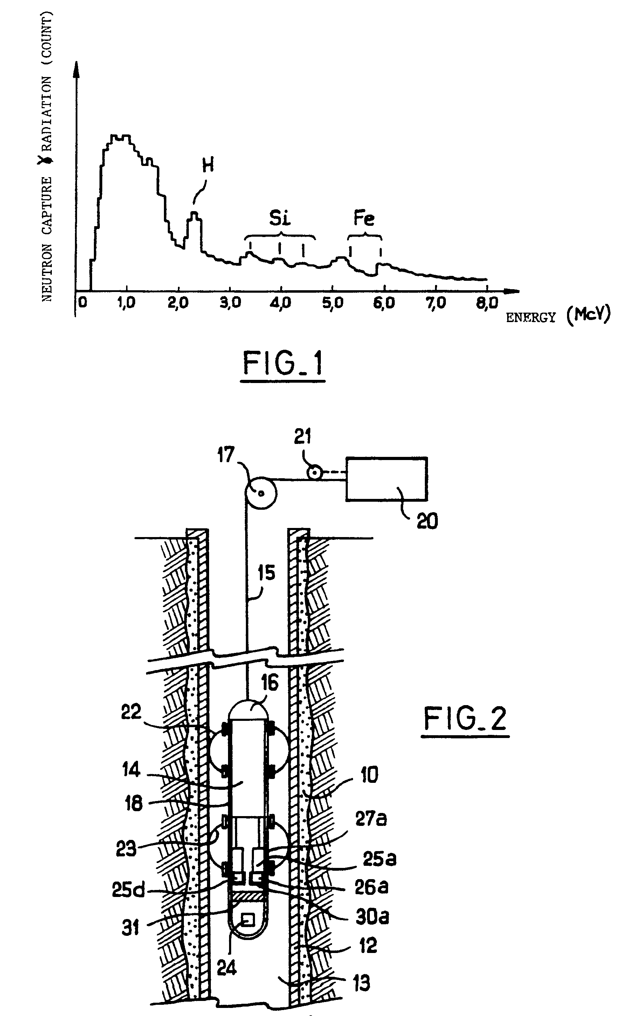

When the formations surrounding a well are irradiated by fast neutrons emitted by a source disposed in the well, these neutrons are scattered and slowed down until they become thermal neutrons capable of interacting with the nuclei in the formations to emit neutron-capture gamma rays. Neutron-capture gamma ray detection is used in conventional manner in certain logging techniques to obtain information on some of the natural elements in the formations. Figure 1 shows an example of a neutron-capture gamma radiation spectrum as detected after a formation has been irradiated with neutrons. This spectrum is shown as detected gamma ray count plotted as a function of gamma ray energy, and it depends on the elements contained in the formation. A large peak at 2.23 MeV may be observed, in particular, due to the presence of hydrogen in the formation. Other known peaks indicate, for example, that silicon and iron are also present.

Normally the cement surrounding the casing in a well is not detectable by such a method since cement does not contain elements having sufficient thermal neutron absorption capacity, or any elements emitting thermal neutron capture gamma rays that can be distinguished from those due to interactions with formations.

According to the invention, it has been discovered that cement can be accurately detected using a nuclear logging technique when a determined proportion of a selected non-radioactive marking substance is mixed with the cement prior to injection. The marking substance is selected so as to be present rarely or in small quantities in formations, to have a large thermal neutron capture cross-section and to emit capture gamma rays having a specific signature. A suitable substance that has been found is boron or a boron compound, and the cement is evaluated by detecting the spectrum of thermal neutron capture gamma rays.

Natural boron is a mixture of two isotopes: 18.8% of $^{10}$ B and 81.2% of $^{11}$ B. The isotope $^{10}$ B has a very large thermal neutron capture cross-section due to the reaction $^{10}B(n,\alpha)^{7}Li$. Numerically, the macroscopic cross-section of natural boron is 103 cm$^{-1}$, i.e. about 23 times larger than that of chlorine. The atom of lithium ($^{7}Li$) appears in the excited state and then drops quickly into a stable state emitting a 478 keV gamma ray in 94% of interactions. In addition, boron is to be found only rarely and in small quantities in the sedimentary formations usually encountered in oil prospecting.

A determined concentration of boron or of a boron compound is thus mixed in the cement prior to injection. For example, amorphous boron may be used which is commercially available at reasonable cost.

Any boron compound compatible with cement can also be used. The concentration of the boron relative to the cement is selected so that for a mean thickness of cement likely to be encountered in a well, the attenuation of thermal neutrons is about 30% to 80%. It can be shown by calculation that this attenuation range is obtained for a concentration of natural boron relative to the cement lying in the range 0.05% to 0.5% by weight. In particular, it has been found that in a well having a nominal diameter of 21.5 cm (8") and having casing with an outside diameter of 17.8 cm (7"), a concentration of about 0.2% by weight of natural boron is desirable since that corresponds to an attenuation of about 60%, i.e. 60% of the thermal neutrons penetrating into the cement give rise to neutron capture gamma ray emission.

Figure 2 shows logging apparatus for evaluating cement 10 that has previously been prepared as mentioned above and has been injected between underground formations 11 and casing 12 in a well 13 passing through the formations.

The logging apparatus comprises a sonde 14 suspended at the end of a multiconductor cable 15 by means of a cable head 16. In conventional manner, the cable 15 passes over a sheave 17 and is wound on a winch (not shown) for moving the sonde along the entire length of the well 13. The top end of the cable 15 is electrically connected via a rotary connector to a surface installation 20 which includes electrical circuits for delivering electrical power to the sonde 14, for sending electrical instructions thereto and for receiving, processing, and recording information-bearing electrical signals coming from the sonde. A depth measuring device 21 detects the surface movements of the cable 15 and provides the surface installation 20 with electrical signals representative of the depth of the sonde 14.

The sonde comprises a sealed housing 18 fitted with centralizers 22 and 23 for holding the sonde in a substantially central position inside the casing 12. A fast neutron source 24 is fixed in the bottom of the housing for emitting neutrons which are diffused in the well and in the medium surrounding the well. This source is preferably a chemical source based on californium-252 which emits a continuous neutron flux having a relatively low mean energy equal to 2.35 MeV.

Other neutron sources may also be used, e.g. a downhole accelerator producing pulses of neutrons at 14 MeV. In this case, neutron capture gamma rays must be detected during determined time intervals after the neutron pulses have been emitted in order to eliminate gamma rays due to inelastic diffusion.

The inside of the housing 18 of the sonde 14 also contains gamma ray detectors which are uniformly distributed all around the sonde, with two of these detectors 25a and 25d being shown in Figure 2. Each detector such as 25a comprises a crystal 26a of thallium-doped sodium iodide NaI(Tl) which is optically coupled with a photomultiplier 27a. Such a detector converts each received gamma ray into an electrical pulse whose amplitude is proportional to the energy of the received gamma ray. The scintillation crystal 26a may be surrounded by a screen 30a constituted by a fine thickness of a lithium compound in order to avoid activation of the crystal. In addition, a screen 31 (e.g. made of tungsten or of a hydrogen-containing material) is interposed inside the sonde 14 between the neutron source 24 and the gamma ray detectors in order to avoid neutrons propagating directly from the source towards the detectors.

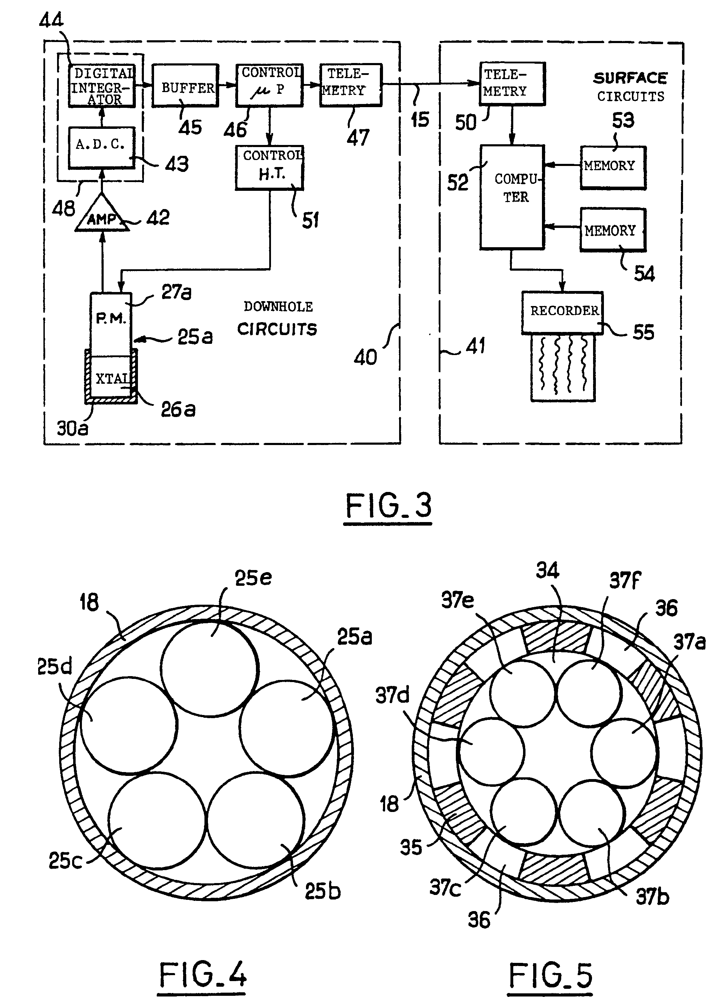

Figure 4 shows the transverse disposition of the detectors inside the housing 18. Five detectors 25a to 25e are distributed inside the housing so as to provide directional information about the cement surrounding the casing, i.e. information which is separate for different zones around the casing. Because of the low energy of the detected gamma rays (478 KeV) each crystal absorbs practically all of the gamma rays which penetrate into it. As a result no collimation is required since each detector is protected from gamma rays coming from the zones situated opposite the other detectors by the other detectors themselves.

A variant of the detection system is shown in Figure 5. This variant comprises a single scintillation crystal 34 surrounded by a screen-forming sleeve 35 which is pierced by collimation windows 36 disposed all around the sleeve. Six photomultipliers 37a to 37f are optically coupled to the crystal 34, with each of these photomultipliers responding mainly to those interactions which take place in the portion of the crystal 34 which is nearest thereto, i.e. to gamma rays coming from the same side of the sonde as the photomultiplier. By combining the response of the various photomultipliers, it is possible to determine the position and the amplitude of gamma ray interaction. This technique is similar to the technique known under the term "Anger" camera. As in the preceding embodiment, is it thus possible to obtain directional information relating to various zones of cement surrounding the casing.

The outputs from the detectors are connected to electronic processing circuits shown diagrammatically in Figure 3. A portion 40 of these circuits is situated inside the housing 14 and is connected by the cable 15 to another portion 41 of these circuits which is disposed in the surface equipment 20. Naturally the particular split shown between circuits which are downhole and circuits which are on the surface could be selected differently. Each detector is associated with its own processing circuit. Only one of these circuits is described above, since the circuits associated with the other detectors are identical thereto.

In the downhole circuits 40, the output of each photomultiplier such as 27a is connected to an amplifier and filter circuit 42 whose output is in the form of a pulse whose pulse shape is a Gaussian. This pulse is applied to a digital pulse height analyzer 48 which comprises an analog-to-digital converter 43 connected to a digital integrator 44. The analog-to-digital converter 43 provides a digital signal sampled at a rate that may lie in the range of a few MHz to a few tens of MHz. The digital integrator 44 processes the sampled signal in order to calculate the energy of each pulse corresponding to a detected neutron capture gamma ray. One example of circuits suitable for numerically analyzing pulse height is described in detail in U.S. patent application number 344 729 filed April 28, 1989.

The output from the digital integrator 44 is connected to a buffer circuit 45 followed by a microprocessor 46 which counts the number of pulses received in various channels distributed over a range of energies preferably running from 200 keV to 3 MeV. The number of channels depends on the desired accuracy and may be equal to 256, for example. The numbers of counts per channel are then processed and encoded in downhole telemetry circuits 47 in order to be transmitted via the cable 15 to corresponding surface telemetry circuits 50 where they are decoded and processed for subsequent processing. Each of the other detectors 25b to 25e is connected to circuits (not shown) similar to the circuits 42-46 which generate signals representative of the detected spectrum and apply these signals to downhole telemetry circuits 47. Telemetry circuits suitable for use as the circuits 47 and 50 are described in greater detail in US patent 4 012 712 (Nelligan).

The downhole circuits 40 also include high voltage regulation for each photomultiplier 27. This regulation comprises a high voltage control circuit connected to the output of the microprocessor 46. The regulation is based on the portion of the detected spectrum which corresponds to the hydrogen peak, and the high voltage of the photomultiplier is regulated so that specific channels in the high region of the spectrum are properly aligned with the 2.23 MeV mean energy of the maximum amplitude peak.

After decoding and processing in the surface telemetry circuits 50, signals representative of the counts per channel in the detected spectra are applied to a computer 52 which may be of the Microvax III type as manufactured by Digital Equipment Corporation. For each detector 25, the detected gamma ray spectrum is processed to determine the quantity of boron situated around the casing. Given the concentration of boron mixed in the cement and the local geometrical conditions of the well, the quantity of cement situated around the casing is then calculated. This is done for each detector so as to obtain cement quantities specific to a plurality of zones distributed around the casing. Such cement quantities may be represented by recording the thickness of the cement or the volume of the cement per linear meter of well as a function of depth.

The quantity of boron is determined by the standard spectrum combination technique described, in particular, in US patent 3 521 064 (Moran et al). This technique is based on the assumption that a detected spectrum is a linear combination of a plurality of standard spectra corresponding to the elements that may be contained in the irradiated zone situated around the well. The standard spectra are initially established in the laboratory and they are stored in a memory 53. The standard spectra may be those due, for example, to boron, to hydrogen, to sulfur, to silicon, to calcium, to chlorine, and to iron. Weighting coefficients are then determined by a least squares approximation method for each of these standard spectra so that when combined they come as close as possible to the detected spectrum. Above-mentioned US patent number 3 521 064 describes this technique in greater detail.

Since the neutron source provides a determined neutron flux, the number of counts due to boron for a constant neutron flux is calculated on the basis of the weighting coefficient found for the boron spectrum. An instrumentation constant obtained by calibrating the sonde is then applied in order to convert the count number into boron mass expressed in grams per linear meter of casing. While performing this conversion, corrections are also performed to take account of neutron attenuation in the fluid in the well and in the casing, and also to take account of gamma ray attenuation in the casing and in the fluid in the well between gamma ray emission and gamma ray detection. These attenuations naturally depend on the diameter of the borehole and on the inside and outside diameters of the casing. Algorithms enabling such attenuation corrections to be performed are established, for example, by digital modelling. Information relating to the nominal diameter of the hole and to the nominal diameters of the casing, and information specifying the concentration of boron subsequently used in the cement are provided by the well manager and entered into a memory 54.

The computer 52 calculates the cement mass on the basis of the previously calculated boron mass and taking account of the concentration of boron in the cement, and it determines the volume of cement per linear meter on the basis of the calculated cement mass and on the diameter data concerning the hole and the casing.

The signal representative of cement volume per linear meter and thus also representative of cement thickness is recorded separately for each detector by a recorder 55.

The person skilled in the art will be able to devise numerous variants of the embodiments described above within the scope of the invention.

## Claims

1. A method of evaluating the cement (10) placed around a casing (12) in a well, wherein a substance having a large neutron capture cross-section and a specific gamma ray emission has been mixed into the cement (10) with a determined concentration prior to placing the cement around the casing, the method comprising the steps of:

    irradiating the surrounding medium with neutrons emitted by a neutron source (24) disposed in a logging sonde (14) adapted to be displaced along the well;

    detecting by detector means (25a-25d) disposed in the sonde (14), neutron capture gamma rays due to interactions of the emitted neutrons with the surrounding medium, to generate first signals representative of the detected gamma rays; and

    processing said first signals representative of the detected gamma rays to generate second signals representative of the number of gamma rays due to neutron interactions with said substance, thereby producing an indication of the quantity of cement surrounding the casing.

2. The method of claim 1 wherein said substance comprises boron or a boron compound.

3. The method of claim 2 wherein said substance is mixed with the cement (10) so that the concentration of boron compared to the cement lies in the range 0.05% to 0.5% by weight.

4. The method of claim 3 wherein said boron concentration is substantially 0.2% by weight.

5. The method of claim 2 wherein said detecting step comprises detecting gamma rays having an energy range lying substantially between 200 keV and 3 MeV.

6. The method of claim 1 wherein:

    said detecting step comprises detecting neutron capture gamma rays coming from a plurality of zones distributed around the well to generate a plurality of first signals respectively representative of the detected gamma rays in each of said zones; and

    said processing step comprises providing a corresponding plurality of second signals respectively representative of the gamma rays due to neutron interactions with said substance in each of said zones, thereby obtaining respective indications of the quantity of cement in each of said zones.

7. The method of claim 1 wherein:

    said detecting step comprises detecting a spectrum of gamma rays having an energy range which is substantially wider than that corresponding to neutron capture gamma rays due to interactions of thermal neutrons with said substance; and

    said processing step includes analyzing the detected gamma ray spectrum in order to generate said second signals representative of gamma rays due to thermal neutron interactions with said substance.

8. The method of claim 7 wherein said spectrum analysing step comprises:

    combining predetermined standard spectra corresponding to the irradiation of said substance and of elements likely to be contained in the surrounding medium to provide a combined spectrum; and

    comparing said combined spectrum with said detected gamma ray spectrum to generate said second signals representative of gamma rays due to thermal neutron interactions with said substance.

9. The method of claim 1 wherein said processing step includes calculating signals representative of the thickness of the cement present around the casing and derived from said second signals representative of the gamma rays due to thermal neutron interactions with the said substance.

10. Logging apparatus for evaluating the cement (10) placed around a casing (12) in a well, the cement including a determined concentration of a selected substance having a large neutron capture cross-section and a specific gamma ray emission, the apparatus comprising:

    a neutron source (24) disposed in a logging sonde (14) adapted to be displaced along the well at the end of a cable (15) for irradiating the surrounding medium, characterized by:

    means (25a-25d) disposed in the sonde (14) for detecting neutron capture gamma rays due to interactions of the neutrons with said surrounding medium, to generate first signals representative of said detected gamma rays; and

    means (40,41) for processing said first signals representative of detected gamma rays, to generate second signals representative of the number of gamma rays due to neutron interactions with said substance, thereby producing an indication of the quantity of cement surrounding the casing.

11. The logging apparatus of claim 10 wherein said detecting means (25a-25d) comprises a plurality of detectors for selectively detecting neutron capture gamma rays coming from a plurality of different zones distributed around the well.

12. The logging apparatus of claim 10 wherein said detecting means (25a-25d) includes at least one scintillation detector (25a) for detecting neutron capture gamma rays over a wide range of energies including neutron capture gamma ray energies due to thermal neutron interactions with said substance.

13. The logging apparatus of claim 12 wherein said source (24) is a californium-252 chemical source.

14. The logging apparatus of claim 12 wherein said processing means comprise:
      means (48) for analyzing the pulse heights of said first signals representative of the detected gamma rays; and
      calculation means (46) for counting pulses in a series of selected energy ranges, to generate signals representative of the spectrum of the detected gamma rays.

15. The logging apparatus of claim 14 further comprising regulation means (51) responsive to the hydrogen peak in the detected gamma ray spectrum in order to stabilize the energy range detected by said scintillation detector (25a).

16. The logging apparatus of claim 15 wherein said processing means further comprises:
      computing means (52) for combining predetermined standard spectra corresponding to elements likely to be encountered in the surrounding medium to provide a combined spectrum; and for comparing said combined spectrum with the detected gamma ray spectrum, to produce said second signals representative of the number of detected gamma rays due to neutron interactions with said substance.

17. The logging apparatus of claim 16 wherein said computing means (52) further comprises means for combining said second signals representative of the number of detected gamma rays due to neutron interactions with said substance with indications relating to cement density and to the diameters of the casing and of the borehole to generate output signals representative of the thickness of the cement.

18. The logging apparatus of claim 17 further comprising means (55) for recording said output signals representative of cement thickness as a function of depth.

19. The logging apparatus of claim 10 further comprising means (22,23) for centering said sonde (14) inside the casing.

20. Logging apparatus for evaluating the cement placed around a casing in a well, the cement including a determined concentration of boron or boron compound, the apparatus comprising:
      a neutron source (24) disposed in a logging sonde (14) adapted to be displaced along the well at the end of a cable (15) for irradiating the surrounding medium, characterized by:
      means (40) disposed in the sonde (14) for detecting neutron capture gamma rays over a wide range of energies around 478 keV, to generate first signals representative of the spectrum of said detected gamma rays; and
      computing means (41) for combining predetermined standard spectra corresponding to boron and chemical elements of the surrounding medium to provide a combined spectrum, and for comparing said combined spectrum with said first signals representative of the detected gamma ray spectrum to generate second signals representative of the number of gamma rays due to neutron interactions with boron, thereby producing an indication of the quantity of cement surrounding the casing.

21. The logging apparatus of claim 20 wherein said computing means (41) comprises means for combining standard spectra corresponding to boron, hydrogen, sulfur, silicon, calcium, chlorine, and iron.

EP 0 443 936 A1

FIG_1

FIG_2

FIG_3

FIG_4

FIG_5

**European Patent Office**

# EUROPEAN SEARCH REPORT

Application Number

EP 91 40 0435

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | US-A-2 231 577 (D.G.C. HARE) <br> * Whole document * | 1,10,20 | G 01 V 5/10 <br> E 21 B 47/00 |
| A | | 2,9 | |
| Y | GB-A-2 012 419 (SCHLUMBERGER, LTD) <br> * Abstract; figure 1; claims * | 1,10,20 | |
| A | | 6-8,16, 17,21 | |
| A,D | US-A-4 129 777 (J.S. WAHL et al.) <br> * Abstract; figure 1 * | 1,9 | |
| A | US-A-3 081 401 (J.C. WILSON et al.) <br> * Claims 1-3 * | 1 | |

TECHNICAL FIELDS SEARCHED (Int. Cl.5)

G 01 V
E 21 B

The present search report has been drawn up for all claims

| Place of search | Date of completion of the search | Examiner |
|---|---|---|
| THE HAGUE | 03-05-1991 | BAROCCI S. |